# FASCICULE DE BREVET EUROPEEN

(11) **EP 2 912 334 B1**
(45) Date de publication et mention de la délivrance du brevet: **09.11.2016**
(21) Numéro de dépôt: 13795826.0
(22) Date de dépôt: 23.10.2013
(51) Int. Cl.: F16F 13/20

(54) **SUPPORT PNEUMATIQUE**
PNEUMATISCHER TRÄGER
PNEUMATIC SUPPORT

(30) Priorité: 24.10.2012 FR 1260142
(43) Date de publication de la demande: 02.09.2015
(73) Titulaire: Anvis SD France SAS, 58300 Decize Cedex (FR)
(72) Inventeur: VERGER, Serge, F-58260 La Machine (FR)
(74) Mandataire: Derambure, Christian
(86) Numéro de dépôt international: PCT/FR2013/052531
(87) Numéro de publication internationale: WO 2014/064384

(56) Documents cités:
- FR-A- 1 492 211
- US-A1- 2010 025 902
- US-B1- 7 341 244

## Description

L'invention concerne le domaine des supports pneumatiques, tels que ceux mis en oeuvre dans des machines diverses, en particulier des moteurs de véhicules.

A titre liminaire, il est précisé que de tels supports pneumatiques peuvent être désignés de différentes manières selon les fabricants, par exemple, cette liste n'étant pas limitative, dispositif d'amortissement pneumatique, support antivibratoire, ressort à air, amortisseur de vibrations, amortisseur de choc, etc. L'expression « support pneumatique » ici utilisée doit être considérée comme portant sur la même chose que ce qui est désigné sous d'autres expressions comme il a indiqué, à savoir un dispositif interposé entre et solidarisé à une première partie telle qu'une structure porteuse et une seconde partie telle qu'un dispositif d'entraînement, destiné à limiter les vibrations susceptibles d'être transmises entre les parties, dont une au moins est en mouvement ou peut être déplacée, notamment vibrer. L'expression « support pneumatique », en tant que telle n'est donc pas limitative.

Il est connu des connaissances générales que de tels supports pneumatiques sont d'usage courant. Ils font d'ailleurs l'objet de nombre de réalisations, telles que celles décrites dans les documents EP 2 141 381, KR 2011 106072, KR 20110 53648, US 2011/10042873, US 6 902 156, US 4407 494, US 4 700 931, US 2010/0001447, JP 57160716, DE 19952638, DE 102004008401, WO 2008/015247, US 2009/0266333, US 2009/0309279, US 2010/0140857, US 2001/01012 et US 2010/0025901.

Plus particulièrement, le document US 2010/0025902 ou d'autres documents analogues décrit un tel support pneumatique comprenant un premier moyen porteur apte à assurer l'association rigide du support pneumatique à l'une des deux parties, un second moyen porteur, apte à assurer l'association rigide du support pneumatique à l'autre des parties, un premier moyen ressort et un second moyen ressort.

Le premier moyen porteur comprend une paroi rigide avec une portion latérale ménageant une grande ouverture et, en vis-à-vis, une portion transversale avec une ou plusieurs petites ouvertures, et il délimite une cavité ayant d'un côté la grande ouverture et de l'autre côté la (ou les) petites ouvertures.

Le premier moyen ressort, comprenant un matériau élastomère, est interposé entre et solidarisé rigidement, vers sa périphérie latérale à la portion latérale de la paroi du premier moyen porteur vers la grande ouverture, et vers sa périphérie transversale extérieure au second moyen porteur. Il a une face transversale médiane dirigée vers et écartée de la portion transversale de la paroi du premier moyen porteur.

Le second moyen ressort, comprenant également un matériau élastomère, est solidarisé rigidement vers sa périphérie latérale à la portion latérale de la paroi du premier moyen porteur vers sa portion transversale. Il a une face transversale médiane et une face opposée disposée en regard de la portion transversale de la paroi du premier moyen porteur. Selon le document US 2010/0025902, cette face opposée comporte des ondulations avec des creux et des saillies, les saillies étant en contact avec la portion transversale de la paroi du premier moyen porteur.

Les deux faces transversales médianes du premier moyen ressort et du second moyen ressort sont disposées en vis-à-vis et ménagent une première chambre de travail déformable apte à recevoir un gaz, en particulier l'air atmosphérique, tandis que, ce que le document US 2010/0025902 appelle une seconde « chambre de travail », est ménagée entre les faces en vis-à-vis et en contact que sont la face opposée du second moyen ressort, laquelle n'est pas plate mais au contraire fortement ondulée avec des creux et des saillies, et la face interne de la portion transversale de la paroi du premier moyen porteur.

Un trou est ménagé dans le second moyen ressort, de sorte à mettre en communication d'un côté la première chambre de travail et de l'autre côté la (ou les) petites ouvertures et donc l'air atmosphérique.

Il résulte du document US 2010/0025902 et notamment de son graphique force/déplacement, que l'important est la première chambre de travail. Celle-ci est active lorsque son volume est positif et elle reste active lorsque son volume diminue jusqu'à être nul au moment où les deux faces transversales médianes des premier et second organes formant ressort sont en contact et appliquées l'une sur l'autre. Comme indiqué, si une pression supplémentaire est alors appliquée, le second moyen ressort est comprimé. Une déformation supplémentaire étant alors obtenue. En effet, la seconde chambre de travail permet d'augmenter l'élasticité du second moyen ressort lorsqu'une pression lui est appliquée.

Il est apparu au déposant qu'un second moyen ressort qui, en premier lieu, a une face dite « face opposée » (à savoir une face disposée en regard de la portion transversale de la paroi du premier moyen porteur) qui ne s'étende pas en direction générale transversale puisqu'elle comporte des ondulations prononcées avec des creux et des saillies, les saillies étant en contact avec la portion transversale de la paroi du premier moyen porteur, en deuxième lieu présente une épaisseur variant dans une large plage (à savoir une épaisseur variant du simple au triple selon les figures du document US 2010/0025902), nuit à la performance du support pneumatique, en terme d'amortissement notamment parce que, une fois que le volume de la première chambre de travail est nul parce que les deux faces transversales médianes des premier et second organes formant ressort sont en contact et appliquées l'une sur l'autre, le déplacement du second moyen ressort induit une très forte variation de la force.

Le document FR 1 492 211 vise un dispositif amortisseur de chocs et de vibrations entre deux éléments tels que bâtis ou pièces, comprenant un 'boîtier solidaire de l'un des éléments, sur le fond duquel repose une membrane élastiques, dite membrane porteuse, et à l'intérieur duquel est disposée une seconde membrane antagoniste solidaire du second élément, ayant notamment la caractéristique consistant à ce que, pour améliorer les caractéristiques d'amortissement, la membrane porteuse est percée d'au moins un trou et la paroi latérale du boîtier est percée d'au moins un orifice dans sa partie comprise entre les deux membranes, ces trous étant de faible diamètre.

Le document US 7 341 244 vise un support antivibratoire hydraulique comprenant un corps de ressort en élastomère qui relie un premier élément d'armature rigide et un second élément d'armature rigide. La première armature rigide comprend un piston qui comporte une tige terminée par un élément d'extrémité, et la deuxième armature rigide a une ouverture qui est traversée par ledit piston. Un module rempli de liquide est monté dans un boîtier qui est fixé à la deuxième armature rigide, et comporte une chambre de travail définie en partie par une paroi en élastomère sensiblement en forme de dôme qui présente une zone centrale en contact avec l'élément d'extrémité du piston sans assurer toute mécanique.

Il existe par conséquent le besoin de disposer de supports pneumatiques du type précédemment considéré qui ne présente pas ces inconvénients. Tel est le problème à la base de l'invention. En effet, il s'agit de limiter le volume sans pour autant être en saturation, afin d'avoir dans la zone de déformation d'une plage donnée un volume limité et une deuxième chambre qui prend le relais pour avoir encore de la phase.

Ci-après, un exposé de l'invention telle que caractérisée dans les revendications.

L'invention a pour objet un support pneumatique, en particulier pour une machine, étant interposé entre et solidarisé à une première partie telle qu'une structure porteuse et une seconde partie telle qu'un dispositif d'entraînement, tel que :
- un premier moyen porteur, rigide, est apte à assurer l'association rigide du support pneumatique à l'une des deux parties, comprend une portion de paroi latérale et une portion de paroi transversale et un second moyen porteur, rigide, est apte à assurer l'association rigide du support pneumatique à l'autre des parties,
- un premier moyen ressort, comprenant un matériau élastomère, est interposé entre et solidarisé rigidement vers sa périphérie latérale à la portion de paroi latérale et vers sa périphérie médiane au second moyen porteur, et présente une face transversale médiane dirigée vers la portion de paroi transversale,
- un second moyen ressort, comprenant un matériau élastomère, est solidarisé rigidement vers sa périphérie latérale à la portion de paroi latérale, et présente une face transversale médiane et une face opposée,
- les deux faces transversales médianes du premier et du second moyen ressort sont en vis-à-vis et ménagent une première chambre de travail déformable, tandis que la face opposée et la portion de paroi transversale sont en vis-à-vis et ménagent une seconde chambre,
- un premier trou assure la communication entre la première chambre de travail et l'atmosphère extérieure et un second trou ménagé dans la portion de paroi transversale assure la communication entre la seconde chambre et l'atmosphère extérieure.

Ce support pneumatique est plus spécialement tel que :
- le second moyen ressort est de faible rigidité et a entre sa face transversale médiane et la face opposée, globalement plates, une épaisseur hors tout qui varie au plus dans le rapport de 1 à 2, et au repos, ladite face transversale médiane est écartée de la face transversale médiane du premier moyen ressort, tandis que la face opposée est écartée de la face interne de la portion de paroi transversale,
- en cas de déformation dynamique du second moyen ressort d'amplitude inférieure à une borne inférieure, ladite face transversale médiane est dans un état libre où elle est écartée de la face transversale médiane du premier moyen ressort, tandis que la face opposée est dans un état libre où elle est écartée de la face interne de la portion de paroi transversale,
- en cas de déformation dynamique comprise entre la borne inférieure et une borne supérieure, ladite face transversale médiane est dans un état assujetti où elle est en contact d'appui avec la face transversale médiane du premier moyen ressort, tandis que la face opposée est dans l'état libre,
- en cas de déformation dynamique supérieure à la borne supérieure, ladite face transversale médiane est dans l'état assujetti et la face opposée est dans un état assujetti où elle est en contact d'appui avec la face interne de la portion de paroi transversale.

Selon une caractéristique, la seconde chambre est un espace continu délimité au moins par la face interne de la portion de paroi transversale et la face opposée du second moyen ressort.

Selon une caractéristique, le second moyen ressort à l'état libre est à déformation et à déplacement non contraint étant sans contact avec ladite face interne de la portion de paroi transversale.

Selon une réalisation, le second moyen ressort présente, dans son état libre, une face transversale médiane globalement légèrement incurvée à concavité tournée vers la face opposée, et une face opposée globalement plane.

Selon une réalisation, la face interne de la portion de paroi transversale est plate et globalement légèrement incurvée à concavité tournée vers le second moyen ressort.

Selon une réalisation, la face transversale médiane du premier moyen ressort est plate et globalement légèrement incurvée à concavité tournée vers le second moyen ressort.

Selon une réalisation, la borne inférieure est égale ou voisine de 3 mm et la borne supérieure est égale ou voisine de 5 mm.

Selon deux réalisations possibles, le premier trou est ménagé dans le second moyen ressort ou bien le premier trou est ménagé au moins dans le premier moyen ressort.

Par rapport à l'état de la technique antérieure, les avantages de l'invention sont exposés ci-après. Il s'agit de limiter le volume d'air (compressibilité de l'air) par un élément déformable sans limitation des grandes déformations, de permettre un apport d'amortissement pour les très grandes déformations grâce à la deuxième chambre, et enfin que la saturation progressive soit obtenue par l'élément déformable.

On décrit maintenant brièvement les figures des dessins.

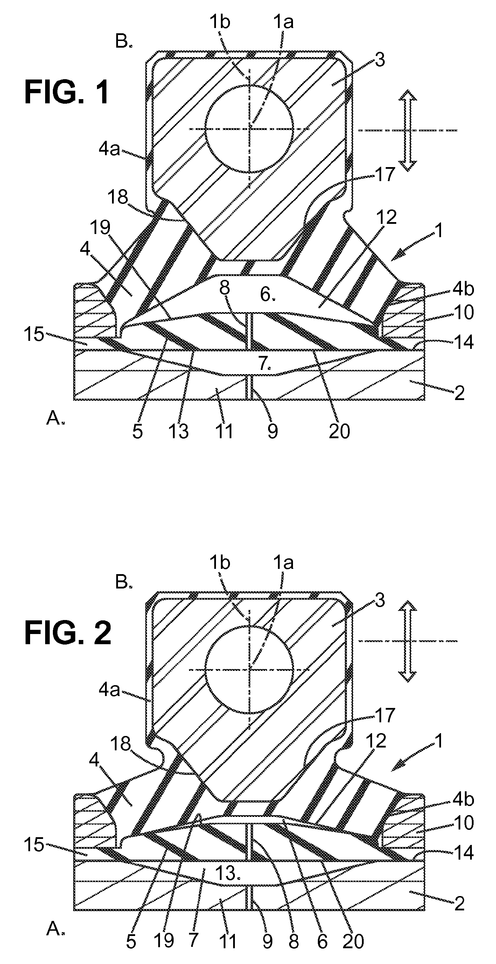

La figure 1 est une vue en coupe transversale d'une première réalisation d'un support pneumatique selon l'invention, dans laquelle le premier trou est ménagé dans le second moyen ressort, le support pneumatique étant au repos avec la face transversale médiane du second moyen ressort écartée de la face transversale médiane du premier moyen ressort et la face opposée du second moyen ressort écartée de la face interne de la portion de paroi transversale du premier moyen support.
La figure 2 est une vue analogue à celle de la figure 1, illustrant le cas d'une déformation dynamique du second moyen ressort d'amplitude inférieure à une borne inférieure, ladite face transversale médiane étant dans un état libre où elle est écartée de la face transversale médiane du premier moyen ressort, tandis que la face opposée est dans un état libre où elle est écartée de la face interne de la portion de paroi transversale.

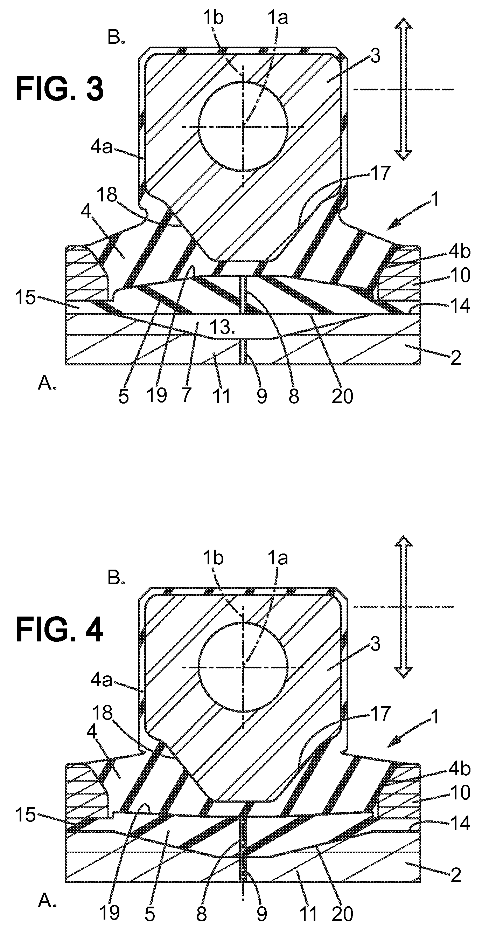

La figure 3 est une vue analogue aux figures 1 et 2, illustrant le cas d'une déformation dynamique comprise entre la borne inférieure et une borne supérieure, ladite face transversale médiane est dans un état assujetti où elle est en contact d'appui avec la face transversale médiane du premier moyen ressort, tandis que la face opposée est dans l'état libre.
La figure 4 est une vue analogue aux figures 1 à 3, illustrant le cas d'une déformation dynamique en cas de déformation dynamique supérieure à la borne supérieure, ladite face transversale médiane étant dans l'état assujetti et la face opposée étant dans un état assujetti où elle est en contact d'appui avec la face interne de la portion de paroi transversale.

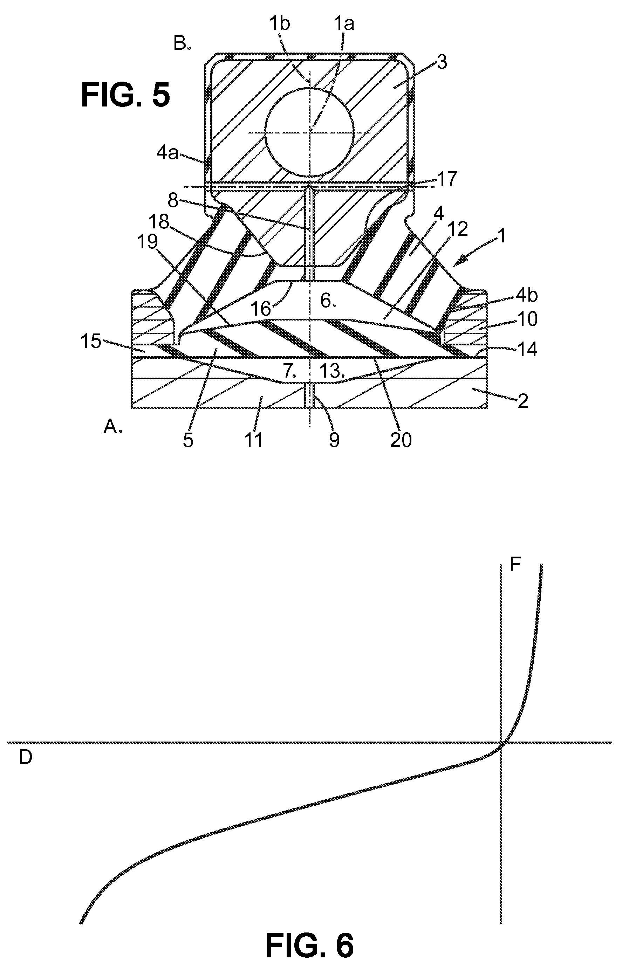

La figure 5 est une vue analogue à la figure 1 d'une seconde réalisation d'un support pneumatique selon l'invention, dans laquelle le premier trou est ménagé dans le premier moyen ressort, le support pneumatique étant au repos.
La figure 6 est un graphique abscisse/ordonnée de la force F (ordonnée) par rapport au déplacement D (abscisse).

Ci-après un exposé détaillé de plusieurs modes de réalisation de l'invention assorti d'exemples et de référence aux dessins.

L'invention a pour objet un support pneumatique 1 qui, comme il a été déjà indiqué, est destiné à une machine où il interposé entre et solidarisé à une première partie telle qu'une structure porteuse et une seconde partie telle qu'un dispositif d'entraînement. Cette machine est par exemple un moteur de véhicule. Cette première partie et cette seconde partie ne font pas l'objet de l'invention, pas plus que les moyens de solidarisation du support pneumatique à ces deux parties. Aussi, ni la première partie ni la seconde partie n'est représentée sur les dessins.

Ce support pneumatique 1 est destiné à limiter les vibrations susceptibles d'être transmises entre les deux parties, dont une au moins est en mouvement ou peut être déplacée, notamment vibrer. Il est entendu que telle est la fonction essentielle remplie.

Le support pneumatique 1 se présente sous la forme d'un ensemble unitaire ayant un premier axe 1a perpendiculaire aux plans des figures 1 à 5 et un second axe 1b, dans les plans des figures 1 à 5, lequel second axe 1b est un axe de symétrie, de même que le plan défini par les axes 1a et 1b, dont la trace sur les plans des figures est le second axe 1b. Dans une réalisation, le support pneumatique 1 est agencé globalement de révolution autour du second axe 1 b. Dans une autre réalisation, il s'étend en direction de l'axe 1a, tout en étant symétrique par rapport au plan défini par les axes 1a et 1b.

Le support pneumatique 1 comprend un premier moyen porteur 2, rigide, apte à assurer l'association rigide du support pneumatique 1 à l'une des deux parties de la machine, et un second moyen porteur 3, lui aussi rigide, et apte à assurer l'association rigide du support pneumatique 1 à l'autre des parties de la machine. À cet effet, le premier moyen porteur 2 et le second moyen porteur 3 sont pourvus d'organes d'association rigide appropriés tels que brides, organes d'association mâle et organes d'association femelle. Le premier moyen porteur 2 est situé dans son ensemble vers un premier côté A du second axe 1b (ici, le bas des figures) et le second moyen porteur 3 est situé dans son ensemble vers un second côté B du second axe 1 b (ici, le haut des figures).

Les qualificatifs de « premier » et « second » permettent de différencier deux moyens, organes, pièces, plus ou moins analogues de par leur nature ou leur fonction, ainsi que les axes. Il est entendu que, pour autant, ces deux moyens, organes, pièces, sont différents, chacun d'eux ayant ses caractéristiques propres. Le qualificatif de « premier » ou de « second » est attribué au moyen, organe, pièce, axe, selon que celui-ci est cité soit pour la première fois dans le présent exposé détaillé de l'invention soit que celui-ci est cité alors qu'un premier moyen, organe, pièce, axe a déjà été cité. Par suite, il n'y a pas lieu d'apparier de quelque manière que ce soit tel premier moyen, organe, pièce, axe avec tel premier autre moyen, organe, pièce, axe ou tel second moyen, organe, pièce, axe avec tel second autre moyen, organe, pièce, axe ou d'apparier tous les premiers moyens, organes, pièces entre eux ou tous les seconds moyens, organes, pièces entre eux, ce qui n'exclut pas qu'un premier moyen, organe, pièce et un second moyen, organe, pièce présentent certaines caractéristiques structurelles et/ou fonctionnelles communes.

Le support pneumatique 1 comprend également un premier moyen ressort 4 et un second moyen ressort 5, comprenant l'un et l'autre un matériau élastomère tel que le matériau élastomère du premier moyen ressort 4 est le plus amortissant possible pour amortir les vibrations tout en ayant un compromis amortissement-rigidification pour ne pas nuire à l'acoustique et un compromis amortissement-fluage pour éviter une variation statique trop importante sous charge. Le matériau élastomère du second moyen ressort 5 est le plus amortissant possible pour permettre d'augmenter la phase (de rajouter de l'amortissement) étant donné qu'il est placé en série entre les deux moyens porteurs.

Le support pneumatique 1 comprend également une première chambre de travail déformable 6 et une seconde chambre de travail elle-aussi déformable 7. Ces chambres sont destinées à recevoir un même gaz à la même pression (conventionnellement désigné dans le texte par « atmosphère extérieure »). Par exemple, il peut s'agir de l'air atmosphérique.

Le support pneumatique 1 comprend également un premier trou 8 qui assure la communication entre la première chambre de travail 6 et l'atmosphère extérieure et un second trou 9 qui assure la communication entre la seconde chambre et l'atmosphère extérieure.

Le premier moyen porteur 2 peut comprendre une portion de paroi latérale 10 et une portion de paroi transversale11 formant une cavité 12 ayant d'un côté une grande ouverture 13 et de l'autre le second trou 9 ménagé dans la portion de paroi transversale11.

Le qualificatif de «latéral » fait généralement référence à ce qui est globalement sur le côté par rapport à l'second axe 1b. Dans le cas d'un support pneumatique 1 globalement de révolution, le qualificatif de latéral est plus précisément le qualification d'annulaire.

Le qualificatif de «transversal » fait généralement référence à ce qui est coupe au travers l'second axe 1 b, plus particulièrement ce qui est globalement orthogonal à l'second axe 1 b.

Le premier moyen porteur 2, en tant que tel, peut faire l'objet de différentes variantes de réalisations, par exemple il peut être monobloc ou en plusieurs parties assemblées et solidarisées entre elles.

Dans la réalisation représentée sur les dessins, le premier moyen porteur 2 comprend dans sa portion de paroi latérale 10 des sièges 14 pour la périphérie latérale 15 du second moyen ressort 5 qui est pincée et ainsi maintenue.

D'autres réalisations du premier moyen porteur 2 peuvent être envisagées.

Il en est de même du second moyen porteur 3.

Dans la réalisation représentée sur les dessins, le second moyen porteur 3 est un bloc de forme massive qui est inséré dans une première partie de maintien 4a du premier moyen ressort 4 qui, dans le cas d'un support pneumatique 1 de révolution peut avoir une forme générale annulaire. C'est ainsi que le premier moyen ressort 4 est maintenu par le second moyen porteur 3. D'autre part, le premier moyen ressort 4 comporte une seconde partie de maintien 4b au premier moyen porteur 2, à proximité de la périphérie latérale 15 du second moyen ressort 5, vers l'extrémité de la portion de paroi latérale 10 délimitant la grande ouverture 13, à l'opposé de la portion de paroi transversale11.

Comme indiqué, le premier moyen ressort 4 est interposé entre et solidarisé rigidement, d'une part - vers sa périphérie latérale - et par l'intermédiaire de la seconde partie de maintien 4b à la portion de paroi latérale 10 et donc au premier moyen porteur 2 et, d'autre part, vers sa périphérie médiane - et par l'intermédiaire de la première partie de maintien 4a - au second moyen porteur 3.

Le premier moyen ressort 4 présente une face transversale médiane 16, dirigée vers le premier côté A et le second moyen ressort 5 et la portion de paroi transversale 11. Selon une réalisation, cette face transversale médiane 16 est plate et globalement légèrement incurvée à concavité tournée vers le second moyen ressort 5 et la portion de paroi transversale 11.

Sur sa face transversale opposée 17, dirigée vers le second côté B, le premier moyen ressort 4 est associé à la face transversale 18 du second moyen porteur 3.

Le qualificatif de « médian » se réfère à ce qui est globalement entre le premier côté du second axe 1b vers où est principalement localisé le premier moyen porteur 2 et le second côté du second axe 1b vers où est principalement localisé le second moyen porteur 3.

Le premier moyen ressort 4 présente une masse assez conséquente, son épaisseur étant elle-même assez conséquente. Il s'étend à la fois dans la direction du second axe 1b et transversalement.

Le second moyen ressort 5 présente une face transversale médiane 19 et une face transversale opposée 20.

Le qualificatif d'«opposé » appliqué à la face transversale 20 signifie que cette face est située de l'autre côté du second moyen ressort 5 que la face transversale médiane 19.

La face transversale médiane 19 est dirigée vers le premier côté A et le premier moyen support 2.

La face transversale opposée 20 est dirigée vers le second côté B et la portion de paroi transversale 11.

Les deux faces transversales médianes 16 et 19 du premier et du second moyen ressort 4 et 5 sont en vis-à-vis et ménagent en délimitant la première chambre de travail 6.

La face transversale opposée 20 du second moyen ressort 5 et la portion de paroi transversale 11 sont en vis-à-vis et ménagent en délimitant la seconde chambre 7.

Le premier trou 8 et le second trou 9 s'étendent au moins pour partie axialement parallèlement au second axe 1 b.

Ces trous 8 et 9 sont débouchant de part et d'autre. Chacun est singulier ou, au contraire, comporte plusieurs trous élémentaires.

Selon la réalisation représentée sur les figures 1 à 4, le premier trou 8 est ménagé dans le second moyen ressort 5 et s'étend entre sa face transversale médiane 19 et sa face transversale opposée 20 où il débouche.

Selon la réalisation représentée sur la figure 5, le premier trou 8 est ménagé dans le premier moyen ressort 4 où il débouche dans la face transversale médiane 16. Il est ménagé également dans la seconde pièce 3 et débouche dans l'atmosphère extérieure.

Le second moyen ressort 5 est de faible rigidité.

La face transversale médiane 19 et la face transversale opposée 20 du second moyen ressort 5 sont globalement plates. Il faut comprendre par là qu'elles sont dépourvues de reliefs accentués tels que des ondulations avec des creux et des saillies.

Selon une réalisation telle que celle illustrée par les dessins, la face interne de la portion de paroi transversale 11 est plate et globalement légèrement incurvée à concavité tournée vers le second moyen ressort 5.

Le second moyen ressort 5 a, entre la face transversale médiane 19 et la face transversale opposée 20, une épaisseur hors tout qui varie peu, par exemple qui varie au plus dans le rapport de 1 à 2, mais qui peut varier dans un rapport plus petit tel que de 1 à de l'ordre de 1,5.

Lorsque le second moyen ressort 5 est au repos, sa face transversale médiane 19 est écartée de la face transversale médiane 16 du premier moyen ressort 5, la première chambre de travail 6 ayant un certain volume. Dans cette situation, la face transversale opposée 20 du second moyen ressort 5 est écartée de la face interne de la portion de paroi transversale 11, la seconde chambre de travail 7 ayant un certain volume. Ainsi, la seconde chambre de travail 7 est un espace continu délimité au moins par la face interne de la portion de paroi transversale 11 et la face transversale opposée 20 du second moyen ressort 5.

Le support pneumatique 1 est caractérisé également par la configuration qu'il prend consécutivement à une déformation dynamique du second moyen ressort 5, et plus spécialement selon l'amplitude de cette déformation. À cet égard, il est défini, s'agissant de l'amplitude de la déformation élastique, une borne inférieure Bᵢ et une borne supérieure Bₛ, bien évidemment plus grande que la borne inférieure Bᵢ.

Par exemple, dans le cas d'un support pneumatique 1 destiné à un moteur de véhicule automobile, la borne inférieure Bᵢ peut être égale ou voisine de 3 mm et la borne supérieure Bₛ peut être égale ou voisine de 5 mm.

En cas de déformation dynamique du second moyen ressort 5 d'amplitude inférieure à la borne inférieure Bᵢ, sa face transversale médiane 19 et sa face transversale opposée 20 sont, respectivement, dans un état désigné par convention d'« état libre ». Cette configuration est représentée sur la figure 2.

Dans son état libre, la face transversale médiane 19 du second moyen ressort 5 est écartée de la face transversale médiane 16 du premier moyen ressort 4.

Dans son état libre, la face transversale opposée 20 du second moyen ressort 5 est écartée de la face interne de la portion de paroi transversale 11 du premier moyen support 2.

En cas de déformation dynamique du second moyen ressort 5 d'amplitude comprise entre la borne inférieure Bᵢ et la borne supérieure Bₛ, la face transversale médiane 19 est dans un état désigné par convention d'« état assujetti » et la face transversale opposée 20 est dans le même état libre que précédemment. Cette configuration est représentée sur la figure 3.

Dans son état assujetti, la face transversale médiane 19 est en contact d'appui avec la face transversale médiane 16 du premier moyen ressort 4.

En cas de déformation dynamique du second moyen ressort 5 d'amplitude supérieure à la borne supérieure Bₛ, la face transversale médiane 19 et la face transversale opposée 20 sont, respectivement, dans l'état assujetti. Cette configuration est représentée sur la figure 4.

Dans son état assujetti, la face transversale opposée 20 est en contact d'appui avec la face interne de la portion de paroi transversale 11 du premier moyen support 2.

Ainsi, le second moyen ressort 5, lorsqu'il est à l'état libre, est à déformation et à déplacement non contraint étant sans contact avec la face interne de la portion de paroi transversale11 du premier moyen support 2.

Selon une réalisation, le second moyen ressort 5 présente, dans son état libre, une face transversale médiane 19 globalement légèrement incurvée à concavité tournée vers la face transversale opposée 20, c'est-à-dire à convexité tournée vers la face transversale médiane 16 du premier moyen ressort 4.

En outre, selon une réalisation, le second moyen ressort 5 présente, dans son état libre, une face transversale opposée 20 globalement plane.

Le second moyen ressort 5 déformable et de faible rigidité permet d'obtenir de grandes déformations du premier moyen ressort 4 sans influencer la courbe de rigidité du premier moyen ressort 4 tout en limitant au maximum le volume d'air de la première chambre de travail 6.

Pour des déformations dynamiques de petites amplitudes (<3mm par exemple) le second trou calibré 9 permet de faire augmenter la pression dans la seconde chambre de travail 7, ce qui a pour effet de diminuer la déformation du second moyen ressort 5 sous la pression de la première chambre de travail 6 et donc d'augmenter la phase créé par le passage de l'air de la première chambre de travail 6 par le premier trou calibré 8.

Pour des déformations dynamiques de plus fortes amplitudes (>3mm et < 5mm par exemple), le premier moyen ressort 4 est en contact avec le second moyen ressort 5. La seconde chambre de travail 7 permet d'obtenir du déphasage par le passage par le second trou calibré 9.

Pour de grandes déformations (>5mm par exemple), le second moyen ressort 5 vient en contact avec le premier moyen porteur 2 ce qui permet d'obtenir une saturation progressive (limitation).

## Revendications

1. Support pneumatique (1), en particulier pour une machine, étant interposé entre et solidarisé à une première partie telle qu'une structure porteuse et une seconde partie telle qu'un dispositif d'entraînement, tel que :
- un premier moyen porteur (2), rigide, est apte à assurer l'association rigide du support pneumatique à l'une des deux parties, comprend une portion de paroi latérale et une portion de paroi transversale (11) et un second moyen porteur (3), rigide, est apte à assurer l'association rigide du support pneumatique à l'autre des parties,
- un premier moyen ressort (4), comprenant un matériau élastomère, est interposé entre et solidarisé rigidement vers sa périphérie latérale à la portion de paroi latérale et vers sa périphérie médiane au second moyen porteur (3), et présente une face transversale médiane (16) dirigée vers la portion de paroi transversale (11),
- un second moyen ressort (5), comprenant un matériau élastomère, est solidarisé rigidement vers sa périphérie latérale à la portion de paroi latérale, et présente une face transversale médiane (19) et une face transversale opposée (20),
- les deux faces transversales médianes (16, 19) du premier et du second moyen ressort (4, 5) sont en vis-à-vis et ménagent une première chambre de travail (6) déformable, tandis que la face transversale opposée (20) et la portion de paroi transversale (11) sont en vis-à-vis et ménagent une seconde chambre (7),
- un premier trou (8) assure la communication entre la première chambre de travail (6) et l'atmosphère extérieure et un second trou (9) ménagé dans la portion de paroi transversale assure la communication entre la seconde chambre (7) et l'atmosphère extérieure,
**caractérisé en ce que** :
- le second moyen ressort (5) est de faible rigidité et a entre sa face transversale médiane (19) et la face transversale opposée (20), globalement plates, une épaisseur hors tout qui varie au plus dans le rapport de 1 à 2, et au repos, ladite face transversale médiane (19) est écartée de la face transversale médiane (16) du premier moyen ressort (4), tandis que la face transversale opposée (20) est écartée de la face interne de la portion de paroi transversale (11),
- en cas de déformation dynamique du second moyen ressort (5) d'amplitude inférieure à une borne inférieure, ladite face transversale médiane (19) est dans un état libre où elle est écartée de la face transversale médiane (16) du premier moyen ressort (4), tandis que la face transversale opposée (20) est dans un état libre où elle est écartée de la face interne de la portion de paroi transversale (11),
- en cas de déformation dynamique comprise entre la borne inférieure et une borne supérieure, ladite face transversale médiane (19) est dans un état assujetti où elle est en contact d'appui avec la face transversale médiane (16) du premier moyen ressort (4), tandis que la face transversale opposée (20) est dans l'état libre,
- en cas de déformation dynamique supérieure à la borne supérieure, ladite face transversale médiane (19) est dans l'état assujetti et la face transversale opposée (20) est dans un état assujetti où elle est en contact d'appui avec la face interne de la portion de paroi transversale (11).

2. Support pneumatique (1) selon la revendication 1, dans lequel la seconde chambre (7) est un espace continu délimité au moins par la face interne de la portion de paroi transversale (11) et la face transversale opposée (20) du second moyen ressort (5).

3. Support pneumatique (1) selon l'une quelconque des revendications 1 et 2, dans lequel le second moyen ressort (5) à l'état libre est à déformation et à déplacement non contraint étant sans contact avec ladite face interne de la portion de paroi transversale (11).

4. Support pneumatique (1) selon l'une quelconque des revendications 1 à 3, dans lequel, dans son état libre, le second moyen ressort (5) présente une face transversale médiane (19) globalement légèrement incurvée à concavité tournée vers la face transversale opposée (20), et une face transversale opposée (20) globalement plane.

5. Support pneumatique (1) selon l'une quelconque des revendications 1 à 4, dans lequel la face interne de la portion de paroi transversale (11) est plate et globalement légèrement incurvée à concavité tournée vers le second moyen ressort (5).

6. Support pneumatique (1) selon l'une quelconque des revendications 1 à 5, dans lequel la face transversale médiane (16) du premier moyen ressort (4) est plate et globalement légèrement incurvée à concavité tournée vers le second moyen ressort (5).

7. Support pneumatique (1) selon l'une quelconque des revendications 1 à 6, dans lequel la borne inférieure est égale ou voisine de 3 mm et la borne supérieure est égale ou voisine de 5 mm.

8. Support pneumatique (1) selon l'une quelconque des revendications 1 à 7, dans lequel le premier trou (8) est ménagé dans le second moyen ressort (5).

9. Support pneumatique (1) selon l'une quelconque des revendications 1 à 7, dans lequel le premier trou (8) est ménagé au moins dans le premier moyen ressort (4).

## Patentansprüche

1. Pneumatische Halterung (1) insbesondere für eine Maschine, die zwischen einem ersten Teil wie zum Beispiel einer tragenden Struktur, und einem zweiten Teil, wie zum Beispiel einer Antriebsvorrichtung positioniert und daran befestigt ist:
- ein erstes starres tragendes Mittel (2), das in der Lage ist, die pneumatische Halterung mit einem steifen tragenden Mittel (3) zu verbinden, umfasst einen Seitenwandabschnitt und einen Querwandabschnitt (11); ein zweites steifes tragendes (3) Mittel ist in der Lage, die pneumatischen Halterung mit jener der anderen Teile starr zu verbinden.
- ein erstes Federelement (5), das ein Elastomermaterial enthält, ist angeordnet zwischen und am Seitenrand verbunden mit dem Seitenwandabschnitt und zum mittleren Rand mit dem zweiten tragenden Mittel (3), und weist eine mittlere Querfläche (16) auf, die zum Querwandabschnitt (11) gerichtet ist,
- ein zweites Federelement (5), das ein Elastomermaterial enthält, ist an seinem Seitenrand starr befestigt mit dem Seitenwandabschnitt und hat eine mittlere Querfläche (19) und eine entgegengesetzte Querfläche (20),
- die beiden mittleren Querflächen (16, 19) des ersten und des zweiten Federelements (4, 5) stehen einander gegenüber und bilden eine erste verformbare Arbeitskammer (6), wohingegen die entgegengesetzte Querfläche (20) und der Seitenwandabschnitt (11) einander gegenüber stehen und eine zweite Kammer (7) bilden;
- ein erstes Loch (8) verbindet die erste Arbeitskammer (6) mit der Außenatmosphäre und ein zweites Loch (9) im Querwandabschnitt verbindet die zweite Kammer (7) mit der Außenatmosphäre;
**dadurch gekennzeichnet, dass**:
- das zweite Federelement (5) eine geringfügige Steifheit aufweist und zwischen seiner mittleren Querfläche (19) und der entgegen gesetzten insgesamt flachen Querfläche (20) eine Gesamtdicke hat, die maximal im Verhältnis 1 : 2 variiert; in der Ruhestellung ist besagte mittlere Querfläche (19) von der mittleren Querfläche (16) des ersten Federelements (4) abgewandt, wohingegen die entgegensetzte Querfläche (20) von der Innenseite des Querwandabschnitts (11) abgewandt ist;
- im Fall einer dynamischen Verformung des zweiten Federelements (5) mit einer Amplitude unterhalb einer Untergrenze ist besagte mittlere Querfläche (19) in einem freien Zustand, in dem sie von der mittleren Querfläche (16) des ersten Federelements (4) abgewandt ist, wohingegen die entgegengesetzte Querfläche (20) sich in einem freien Zustand befindet, in dem sie von der Innenfläche des Querwandabschnitts (11) abgewandt ist;
- im Falle einer dynamischen Verformung zwischen der Untergrenze und einer Obergrenze befindet sich besagte mittlere Querfläche (19) in einem Zustand, in dem sie dem Auflagekontakt der mittleren Querfläche (16) des ersten Federelements (4) ausgesetzt ist, wohingegen sich die entgegengesetze Querfläche (20) in einem freien Zustand befindet;
- im Falle einer dynamischen Verformung, die über die Obergrenze hinaus geht, ist besagte mittlere Querfläche (19) in einem beanspruchten Zustand und die entgegengesetzte Querfläche (20) in einem Zustand in dem die auf der Innenfläche des Querwandabschnitts (11) aufliegt.

2. Pneumatische Halterung (1) nach Anspruch 1, in der die zweite Kammer (7) ein durchgehender Bereich ist, der mindestens durch die Innenfläche des Querwandabschnitts (11) und die entgegegensetzte Querfläche (20) des zweiten Federelements (5) begrenzt ist.

3. Pneumatische Halterung (1) nach einem der Ansprüche 1 und 2, in dem sich das zweite Federelement (5) im freien Zustand ohne Beanspruchung verformt und verschiebt, da es nicht in Kontakt mit besagter Innenfläche des Querwandabschnitts (11) kommt.

4. Pneumatische Halterung (1) nach einem der Ansprüche 1 bis 3, in welcher das zweite Federelement (5) in seinem freien Zustand eine zur entgegengesetzten Querfläche (20) hin gewandte, leicht konkav gebogene mittlere Querfläche (19) aufweist, und eine entgegengesetzte Querfläche (20), die generell eben ist.

5. Pneumatische Halterung (1) nach einem der Ansprüche 1 bis 4, in der die Innenfläche des Querwandabschnitts (11) flach und generell leicht konkav gebogen ist zum zweiten Federelement (5) gewandt ist.

6. Pneumatische Halterung (1) nach einem der Ansprüche 1 bis 5, in dem die mittlere Querfläche (16) des ersten Federelements (4) flach und zum zweiten Federelement (5) hin gewandt insgesamt leicht konkav gebogen ist.

7. Pneumatische Halterung (1) nach einem der Ansprüche 1 bis 6, in dem die Untergrenze etwa oder gleich 3 mm und die Obergrenze etwa oder gleich 5 mm beträgt.

8. Pneumatische Halterung (1) nach einem der Ansprüche 1 bis 7, in der das erste Loch (8) im zweiten Federelement(5) ausgebildet ist.

9. Pneumatische Halterung (1) nach einem der Ansprüche 1 bis 7, in dem das erste Loch (8) mindestens im ersten Federelement (4) ausgebildet ist.

## Claims

1. A pneumatic support (1), in particular for a machine, being interposed between and secured to a first part such as a carrier structure and a second part such as a driving device, such that:
- a first rigid carrier means (2) is able to provide the rigid association of the pneumatic support with one of the two parts, comprises a lateral wall portion and a transverse wall portion (11) and a second rigid carrier means (3) is able to provide the rigid association of the pneumatic support with the other part,
- a first spring means (4), comprising an elastomer material, is interposed between and rigidly secured towards its lateral periphery with the lateral wall portion and towards this median periphery with the second carrier means (3), and has a median transverse face (16) directed towards the transverse wall portion (11),
- a second spring means (5), comprising an elastomer material, is rigidly secured towards its lateral periphery to the lateral wall portion, and has a median transverse face (19) and an opposite transverse face (20),
- the two median transverse faces (16, 19) of the first and second spring means (4, 5) are facing each other and form a first deformable working chamber (6), while the opposite transverse face (20) and the transverse wall portion (11) are facing each other and form a second chamber (7),
- a first hole (8) provides communication between the first working chamber (6) and the external atmosphere and a second hole (9) provided in the transverse wall portion provides communication between the second chamber (7) and the external atmosphere,
**characterised in that**:
- a second spring means (5) has low rigidity and has, between its median transverse face (19) and the opposite transverse face (20), roughly flat, has an overall thickness that varies by no more than the ratio 1 to 2, and, at rest, said median transverse face (19) is separated from the median transverse face (16) of the first spring means (4), while the opposite transverse face (20) is separated from the internal face of the transverse wall portion (11),
- in the case of dynamic deformation of the second spring means (5) with an amplitude less than a lower bound, said median transverse face (19) is in a free state in which it is separated from the median transverse face (16) of the first spring means (4), while the opposite transverse face (20) is in a free state in which it is separated from the internal face of the transverse wall portion (11),
- in the case of dynamic deformation lying between the lower bound and an upper bound, said median transverse face (19) is in a secured state in which it is in abutment contact with the median transverse face (16) of the first spring means (4), while the opposite transverse face (20) is in the free state,
- in the case of dynamic deformation higher than the upper bound, said median transverse face (19) is in the secured state and the opposite transverse face (20) is in a secured state in which it is in abutment contact with the internal face of the transverse wall portion (11).

2. A pneumatic support (1) according to claim 1, in which the second chamber (7) is a continuous space delimited at least by the internal face of the transverse wall portion (11) and the opposite transverse face (20) of the second spring means (5).

3. A pneumatic support (1) according to either of claims 1 and 2, in which the second spring means (5) in the free state has non-constrained deformation and movement, being without contact with said internal face of the transverse wall portion (11).

4. A pneumatic support (1) according to any of claims 1 to 3, in which, in its free state, the second spring means (5) has a median transverse face (19) slightly curved overall with its concavity turned towards the opposite transverse face (20), and a roughly planar opposite transverse face (20).

5. A pneumatic support (1) according to any of claims 1 to 4, in which the internal face of the transverse wall portion (11) is flat and slighted curved overall with its concavity turned towards the second spring means (5).

6. A pneumatic support (1) according to any of claims 1 to 5, in which the median transverse face (16) of the first spring means (4) is flat and slightly curved overall with its concavity turned towards the second spring means (5).

7. A pneumatic support (1) according to any of claims 1 to 6, in which the lower bound is equal to or around 3 mm and the upper bound is equal to or around 5 mm.

8. A pneumatic support (1) according to any of claims 1 to 7, in which the first hole (8) is provided in the second spring means (5).

9. A pneumatic support (1) according to any of claims 1 to 7, in which the first hole (8) is provided at least in the first spring means (4).
